(19) Europäisches Patentamt / European Patent Office / Office européen des brevets

(11) **EP 2 725 703 B1**

(12) **FASCICULE DE BREVET EUROPEEN**

(45) Date de publication et mention
de la délivrance du brevet:
**06.12.2017 Bulletin 2017/49**

(51) Int Cl.:
*H02P 6/18* *(2016.01)* *H02P 6/182* *(2016.01)*

(21) Numéro de dépôt: **12190286.0**

(22) Date de dépôt: **26.10.2012**

(54) **Dispositif de contrôle d'un moteur sans capteur ni balais**

Kontrollverfahren eines Motors ohne Sensor und ohne Kontaktbürsten

Device for controlling a sensorless, brushless motor

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**30.04.2014 Bulletin 2014/18**

(73) Titulaire: **Dassym SA
2068 Hauterive (CH)**

(72) Inventeur: **Voillat, Jean-Pierre
2857 Montavon (CH)**

(74) Mandataire: **P&TS SA (AG, Ltd.)
Av. J.-J. Rousseau 4
P.O. Box 2848
2001 Neuchâtel (CH)**

(56) Documents cités:
**FR-A1- 2 846 486   GB-A- 2 176 068
JP-A- 10 225 172   JP-A- 2001 231 285**

**Description**

Domaine technique

La présente invention concerne un dispositif de contrôle d'un moteur sans capteur ni balais.

Etat de la technique

Un instrument manuel chirurgical, notamment dentaire, comprend en général une pièce à main, par exemple un contre-angle, qui peut être munie d'un outil, par exemple une fraise, entraîné par un moteur tournant. Ce moteur peut former avec la pièce à main une seule pièce, ou être une pièce séparée et reliée à la pièce à main.

Le dispositif de contrôle de ce type d'instrument est souvent lié à la chaise du patient, par exemple un fauteuil dentaire, à un meuble ou en général à un boîtier qui est relié à l'instrument manuel par un raccord flexible contenant des fils électriques et des tubes de passage pour l'air et l'eau.

Le moteur utilisé pour entraîner l'outil est de plus en plus souvent un moteur sans capteur ni balais. Ce moteur peut être un moteur triphasé, c'est-à-dire comprenant trois phases moteur.

Dans un moteur sans capteur ni balais un ou plusieurs aimants permanents forment le rotor et un ensemble de bobines forme le stator. Puisque ce type de moteur ne comprend pas de balais, un dispositif de contrôle doit assurer la commutation du courant dans les bobines statoriques en fonction de la position angulaire du rotor, qui donc doit être connue précisément.

Puisque un moteur sans capteur ni balais est dépourvu de capteurs de position, pour évaluer la position instantanée du rotor il est possible d'analyser avec une unité de calcul les forces électromotrices ou EMFs (« ElectroMotive Forces ») qui sont produites dans les bobines statoriques par le rotor tournant.

Le dispositif de contrôle de ce type de moteur peut être utilisé aussi comme module d'asservissement, par exemple comme module d'asservissement en vitesse du moteur.

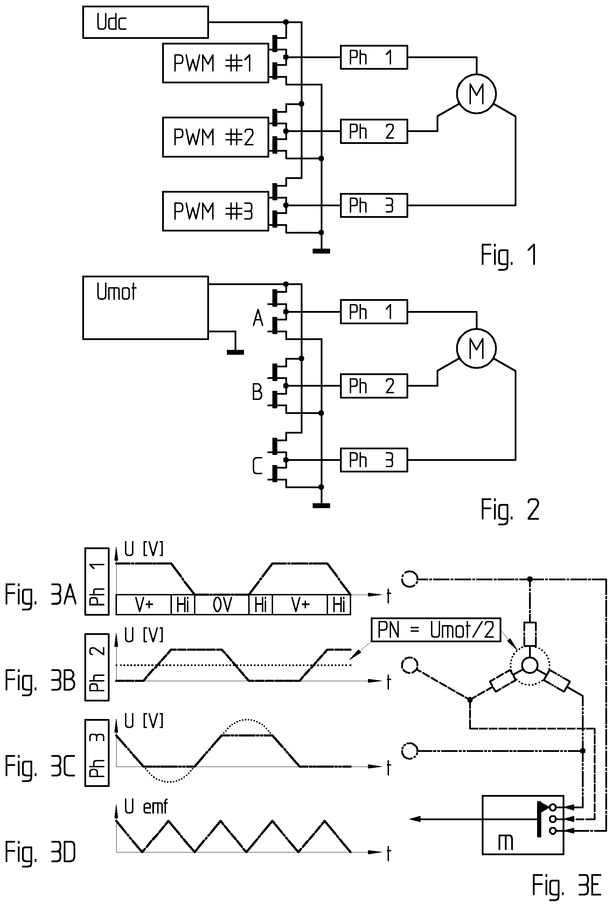

La figure 1 illustre un exemple d'un dispositif de contrôle connu d'un moteur M sans capteur ni balais, alimenté par une tension fixe Udc. Chaque phase Ph1, Ph2 et Ph3 du moteur M est associée à un circuit PWM (« Pulse Width Modulation » ou modulation de largeur d'impulsion) personnalisé permettant de générer un champ tournant sinusoïdal triphasé. Dans ce cas, les EMFs sont très perturbées et l'acquisition de la position du rotor se fait généralement par un filtre de Kalman.

L'utilisation d'un filtre de Kalman implique plusieurs désavantages, dont le principal est le temps requis pour connaître la position du rotor, car ce type de filtre doit analyser plusieurs périodes des EMFs avant de trouver leur fréquence fondamentale, nécessaire pour déterminer la position du rotor.

La figure 2 illustre un autre exemple de dispositif de contrôle connu d'un moteur M sans capteur ni balais. Dans ce cas un seul régulateur de tension continue est agencé pour générer un signal de tension continue ayant une valeur Umot qui est directement proportionnelle à la vitesse de rotation du moteur M. Par exemple Umot peut appartenir à la plage 0 V - 32 V : la valeur 0 V correspond à une vitesse nulle de rotation du moteur M, la valeur 32 V correspond à une vitesse maximale de rotation du moteur M, par exemple et de façon non limitative 40'000 tours par minute. Le régulateur de tension continue est commun aux trois phases moteur Ph1, Ph2 et Ph3.

La distribution séquentielle de Umot aux trois phases moteur Ph1, Ph2 et Ph3 est assurée aux moyen de trois commutateurs A, B, C. Chaque commutateur peut comprendre deux interrupteurs, par exemple deux transistors IGBT (« Insulated Gate Bipolar Transistor ») ou MOSFET (« Metal Oxide Semiconductor Field Effect Transistor »), et peut avoir trois états possibles : Umot, Hi (Haute Impédance) et 0 Vdc.

Comme visible sur les figures 3A à 3C, grâce à ces commutateurs A, B, C, chaque phase Ph1, Ph2 et Ph3 se trouve successivement à Umot [V+], en haute impédance [Hi], ou à zéro volt [0V]. Le point neutre PN, visible sur la figure 3E, garde une tension constante égale à Umot/2.

Chaque phase Ph1, Ph2 et Ph3 durant l'état « haute impédance » Hi fournit une portion de la tension génératrice de la phase Ugn, par exemple la tension Ug3 représentée sur la figure 3C par la ligne pointillée, additionnée de la valeur PN, visible sur la figure 3B.

Un multiplexeur m, visible sur la figure 3E, permet de juxtaposer les portions Ugn détectables, de façon à obtenir les signaux EMFs illustrées sur la figure 3D.

Ces EMFs sont « à l'état brut ». Dans ce contexte cette expression indique que les EMFs sont prises directement sur les phases moteur du moteur M, c'est-à-dire sans être modifiées ni manipulées.

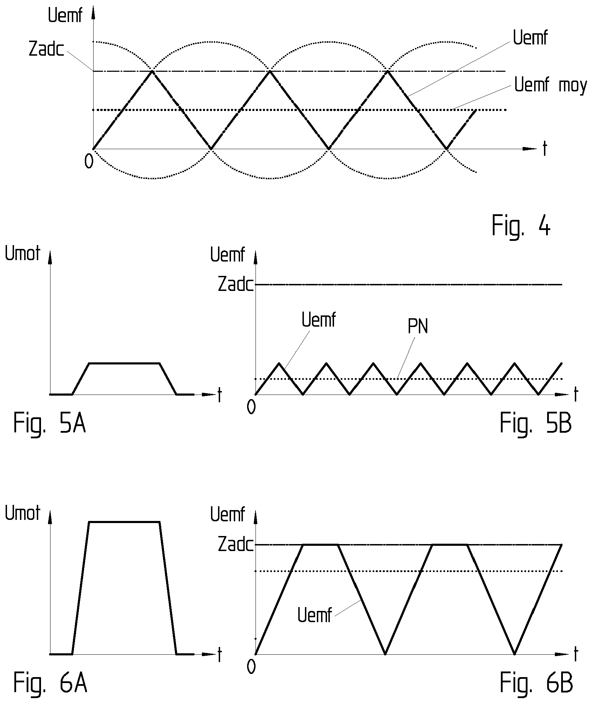

Comme discuté, ces signaux EMFs doivent être acquis et traités par une unité de calcul, par exemple un microprocesseur, afin de calculer la position instantanée du rotor. Dans le cas idéal, illustré sur la figure 4, les EMFs ont des amplitudes qui sont conformes avec les caractéristiques de l'unité de calcul, notamment avec sa tension d'alimentation Zadc, par exemple 3,3 V, correspondant à la valeur maximale de sa zone d'acquisition analogique [0, Zadc]. Si, par exemple et de façon non limitative, la tension d'alimentation Zadc de l'unité de calcul est égale à 3.3 V, les amplitudes des EMFs dans le cas idéal seront comprises entre 0 V et 3.3 V, comme illustré sur la figure 4.

En effet les EMFs oscillent entre une valeur maximale et une valeur minimale. La différence de ces deux valeurs définit l'amplitude des EMFs. La moyenne des EMFs est définie comme la moyenne arithmétique entre leur valeur maximale et leur valeur minimale.

Le cas de la figure 4 est idéal seulement, car dans la réalité en fonction de la vitesse du moteur M, autrement dit de sa tension d'alimentation Umot, la moyenne des EMFs (ou point neutre, PN) n'est pas centrée sur la moyenne de la tension d'alimentation de l'unité de calcul Zadc, par exemple elle est plus grande ou plus petite que Zadc/2, ce qui a pour conséquence un calcul de la position du rotor qui n'est ni précis ni fiable, et donc une synchronisation non optimale des commutations des phases moteur avec le champ tournant généré par le rotor.

En outre l'amplitude des EMFs peut varier dans de grandes proportions en fonction de la vitesse du moteur M, autrement dit de sa tension d'alimentation Umot, ce qui a toujours comme conséquence un calcul pas précis ni fiable de la position du rotor.

La figure 5A illustre la tension d'alimentation Umot correspondant à une « basse » vitesse du moteur M. Dans ce contexte, l'expression « basse vitesse » indique une vitesse de rotation du moteur M sans balai ni capteur qui est inférieure à 2'000 tours par minute, par exemple inférieure à 1'000 tours par minute. A cause de cette basse vitesse les EMFs correspondantes, illustrées sur la figure 5B, ont une amplitude faible par rapport à Zadc. En d'autres mots, l'unité de calcul ne pourra pas, sur la base de ces faibles EMFs, calculer précisément et de façon fiable la position du rotor, avec toutes les conséquences mentionnées ci-dessus.

Des basses vitesses de rotation du moteur M, de l'ordre de grandeur de quelques centaines de tours/minute, par exemple de 200 tours/minutes, peuvent être utilisées dans un instrument dentaire (par exemple dans un instrument dentaire pour le traitement de racine), dont la nécessité de trouver une solution permettant d'avoir une rotation du moteur M maîtrisée et optimale même à des basses vitesses de rotation du moteur.

Le même type de problème existe pour des « hautes » vitesses du moteur M, comme illustré sur les figures 6A et 6B. Dans ce contexte, l'expression « haute vitesse » indique une vitesse de rotation du moteur M sans balai ni capteur qui est supérieure à 10'000 tours par minute.

Des hautes vitesses de rotation du moteur M, par exemple de 40'000 tours/minute, sont utilisées dans un instrument dentaire, par exemple dans un instrument dentaire pour fraiser, dont la nécessité de trouver une solution permettant d'avoir une rotation du moteur M maîtrisée et optimale à des hautes vitesses de rotation du moteur aussi.

Les vitesses entre 2'000 et 10'000 tours par minute sont des vitesses « moyennes » qui en règle générale ne posent pas des problèmes de saturation.

Différentes solutions ont été proposées pour essayer de résoudre les problèmes liés à des vitesses basses et/ou hautes de rotation du moteur M.

Par exemple US2005104545 propose d'utiliser deux circuits comparateurs ayant des tensions de référence différentes en fonction de la vitesse du moteur. Une solution analogue est décrite dans WO06021075

US5998946, US5739651 et EP1728315B1 proposent d'utiliser deux schémas de détection différents en fonction de la vitesse de rotation du moteur.

US2009167226 et US2009033263 décrivent de stopper la l'alimentation moteur périodiquement par un circuit "masque" afin d'éviter la détection incorrecte des EMFs. Cette solution prévoit la présence d'une connexion supplémentaire pour le point neutre (CT).

EP1109301 mentionne la détermination de la position du rotor en amplifiant la variation de la fréquence de résonance d'un circuit oscillant.

Tous ces documents décrivent des solutions encombrantes, compliquées et qui ne permettent pas de gérer en même temps et de façon satisfaisante des vitesses hautes et basses de rotation d'un moteur sans capteur ni balais.

US2003234629 mentionne de résoudre le problème des basses vitesses de rotation seulement en corrigeant l'amplitude des EMFs avec un diviseur de tension pour chaque phases moteur, entre chaque force électromotrice à l'état brut prise directement sur les phases moteur du moteur et la masse.

Dans ce document les EMFs ainsi réduites sont envoyées à un circuit de commande automatique de gain (ou AGC, « Automatic Gain Control »), qui met a l'échelle la grandeur des EMFs détectées pour chacun des enroulements de phase à une valeur normalisée. Le circuit de commande automatique de gain est commandé par l'unité de calcul de façon dynamique. Cette solution permet en d'autres mots de modifier *l'amplitude* des EMFs de façon à ce qu'elles soient compatibles avec la tension d'alimentation de l'unité de calcul.

La solution proposée dans ce document est lente car l'AGC est commandé par l'unité de calcul. En d'autres mots elle n'est pas instantanée, car l'amplitude des EMFs est corrigée suite à un signal provenant de l'unité de calcul qui est généré après avoir analysé l'amplitude des EMFs à corriger : les calculs de l'unité de calcul ne peuvent donc débuter qu'après la mesure d'au moins une période EMF à quoi il faut ajouter le temps de calcul et dans le cas de variations brutales de vitesse, ces retards peuvent poser problème.

En outre ce document ne reconnaît pas le problème des hautes vitesses et ne propose pas non plus des solutions pour des moteurs avec des vitesses de rotation constantes, sans devoir modifier l'amplitude des EMFs, notamment au démarrage.

Enfin cette solution utilise des AGCs, qui sont des composants coûteux et qui ont souvent une précision de gain relative, en affectant ainsi la précision du calcul de la position du rotor.

GB2176068 décrit un dispositif de contrôle d'un moteur sans capteur ni balais d'une machine à lessive, comprenant trois diviseurs de tension, chaque diviseur étant placé entre une phase moteur et une tension de référence.

FR2846486 concerne un dispositif de commande de fonctionnement d'un moteur électrique moteur à courant alternatif (AC) triphasé synchrone à aimant permanent pour un véhicule, destiné à faciliter la pression de suralimentation dans un turbocompresseur et également à charger une batterie. Ce dispositif comprend un circuit de détection de position destiné à détecter une position du rotor sur la base d'une tension contre-électromotrice générée aux bornes de son enroulement, un moyen de division (CAG) destiné à diviser la tension aux bornes de l'enroulement et à fournir la tension divisée au circuit de détection de position et un moyen de changement (CAG) destiné à changer le rapport de tension divisée dans le moyen de division selon la vitesse de rotation du moteur électrique.

JP2001231285 concerne un système de contrôle d'un moteur sans capteur ni balais dans lequel chaque phase moteur est divisée par un diviseur de tension et comprenant trois comparateurs comparant les phases moteur divisées avec une tension de référence.

Bref résumé de l'invention

Un but de la présente invention est de proposer un dispositif de contrôle d'un moteur sans capteur ni balais exempt d'au moins certaines des limitations des dispositifs de contrôle connus, mentionnées ci-dessus.

Un autre but de l'invention est de proposer un dispositif de contrôle d'un moteur sans capteur ni balais qui permet ce contrôle sans aucun retard, c'est-à-dire en temps réel.

Un autre but de l'invention est de proposer un dispositif de contrôle d'un moteur sans capteur ni balais qui permet de gérer de façon simple et fiable à la fois des basses et des hautes vitesses de rotation.

Un autre but de l'invention est de proposer un dispositif de contrôle d'un moteur sans capteur ni balais plus simple et économique que les dispositifs connus.

Selon l'invention, ces buts sont atteints notamment au moyen d'un dispositif de contrôle d'un moteur sans capteur ni balais selon la revendication 1.

Le dispositif de contrôle d'un moteur sans capteur ni balais selon l'invention comprend

- un premier module d'amplification commun aux phases moteur et agencé pour générer un signal de tension intermédiaire,
- un diviseur de tension entre chaque phase moteur et un noeud sur lequel est généré le signal de tension intermédiaire,
- une unité de calcul agencée pour contrôler ce moteur sur la base de ces premières forces électromotrices corrigées.

Avantageusement le dispositif selon l'invention comprend aussi - un régulateur de tension continue agencé pour générer un signal de tension continue,

- des commutateurs agencés pour distribuer séquentiellement le signal de tension continue aux phases moteur du moteur sans capteur ni balais,
- une unité de calcul.

Avantageusement chaque diviseur de tension est agencé pour générer une première force électromotrice corrigée ayant une valeur moyenne prédéterminée, et qui est utilisée par l'unité de calcul afin de contrôler le moteur sur la base des ces premières forces électromotrices corrigées, notamment afin de calculer la position du rotor du moteur.

Dans le contexte de cette invention l'expression « valeur moyenne » d'une tension, par exemple d'une force électromotrice, indique la valeur obtenue par la moyenne arithmétique entre la valeur maximale et la valeur minimale de la tension considérée.

Avantageusement la valeur moyenne prédéterminée est sensiblement égale à la moitié de la valeur de la tension d'alimentation de l'unité de calcul. Dans ce contexte l'adverbe « sensiblement » indique que des petites différences entre la valeur moyenne de la première force électromotrice corrigée et celle de la tension d'alimentation du moteur, par exemple liées à des tolérances de mesure, peuvent être acceptées.

Selon l'invention les premières forces électromotrices corrigées sont automatiquement centrées sur la moyenne de la tension d'alimentation de l'unité de calcul sans utiliser des AGCs ou des boucles de réaction avec l'unité de calcul. En d'autres mots, en utilisant seulement des composants hardware, notamment le premier module d'amplification et les diviseurs de tension pour chaque phase moteur, il est possible de centrer de façon précise et fiable la moyenne des premières forces électromotrices corrigées de façon à ce qu'elle soit sensiblement identique à la moitié de la tension d'alimentation de l'unité de calcul.

Cette solution donc non seulement est plus rapide que les solutions connues, qui utilisent le software de l'unité de calcul qui est dans la boucle de réaction des AGCs, mais permet de travailler en temps réel car basée sur des composants hardware seulement.

En outre, car la valeur moyenne prédéterminée est sensiblement égale à la moitié de la valeur de la tension d'alimentation de l'unité de calcul, cette solution permet de centrer la moyenne des premières EMFs corrigées dans la zone d'acquisition de l'unité de calcul sans devoir nécessairement modifier l'amplitude des premières forces électromotrices aussi.

Même en présence d'une variation de la vitesse de rotation du moteur, c'est-à-dire du signal de tension continue Umot, cette solution permet d'obtenir une valeur moyenne des premières forces électromotrices corrigées qui est constante indépendamment de la valeur de tension de ce signal de tension continue.

Avantageusement le premier module d'amplification et chaque diviseur de tension permet aussi que chaque première force électromotrice corrigée ait une valeur maximale inférieure ou au plus égale à la tension d'alimentation de l'unité de calcul et une valeur minimale supérieure ou au plus égale à 0 V. En d'autres termes le dispositif selon l'invention permet que les premières forces électromotrices corrigées soient compatibles avec la zone d'acquisition de l'unité de calcul, en évitant des saturations.

Dans une variante préférentielle le premier module d'amplification est agencé pour générer le signal de tension intermédiaire à partir du signal de tension continue et d'un premier signal de tension de référence. Avantageusement ce premier signal de tension de référence est déterminé en fonction de la tension d'alimentation de l'unité de calcul.

Dans une autre variante le premier module d'amplification comprend un premier amplificateur opérationnel et deux résistances. Avantageusement le rapport entre ces résistances est déterminé en fonction de la tension d'alimentation de l'unité de calcul.

Dans une autre variante de l'invention le dispositif comprend aussi un deuxième module d'amplification pour chaque phase moteur, chaque deuxième module d'amplification étant agencé pour amplifier la première force électromotrice corrigée de façon variable en fonction du signal de tension continue et générer une deuxième force électromotrice corrigée. Dans cette variante l'unité de calcul est agencée pour calculer la position du rotor sur la base de ces deuxièmes forces électromotrices corrigées.

En d'autres mots dans cette dernière variante il est possible de modifier le gain des forces électromotrices en fonction de la vitesse moteur de manière à maintenir des amplitudes traitables par l'unité de calcul. En effet chaque deuxième module d'amplification est agencé pour amplifier la première force électromotrice corrigée de façon à ce que chaque deuxième force électromotrice corrigée ait une amplitude qui corresponde sensiblement à celle de la tension d'alimentation de l'unité de calcul et une valeur moyenne prédéterminée sensiblement égale à la moitié de la tension d'alimentation de l'unité de calcul.

Dans une autre variante, chaque deuxième module d'amplification permet des amplifications avec au moins deux plages de gain possibles, chaque plage de gain étant sélectionnée par l'unité de calcul en fonction de la valeur du signal de tension continue Umot.

Dans une variante préférentielle chaque deuxième module d'amplification a au moins trois plages de gain possibles, où

- La première plage de gain est sélectionnée par l'unité de calcul si la valeur du signal de tension continue Umot est comprise entre 0 V et une première fraction de la tension maximale du signal de tension continue Umot, par exemple et de façon non limitative entre 0 V et environ le 5% de Umot, par exemple entre 0 V et 1,5 V pour Umot = 32 V.
- La deuxième plage de gain est sélectionnée par l'unité de calcul si la valeur du signal de tension continue Umot est comprise entre 0 V et une deuxième fraction de la tension maximale du signal de tension continue Umot, la deuxième fraction étant plus grande que la première fraction. Par exemple et de façon non limitative entre 0 V et environ le 20% de Umot, par exemple entre 0 V et 7 V pour Umot = 32 V.
- La troisième plage de gain est sélectionnée par l'unité de calcul si la valeur du signal de tension continue Umot est comprise entre 0 V et la tension maximale du signal de tension continue Umot, par exemple et de façon non limitative entre 0 V et 32 V.

Dans ce cas l'unité de calcul est agencée pour choisir la plage de gain qui donne la plus grande amplification si deux ou trois plages de gain sont possibles pour la même valeur du signal de tension continue.

Dans une variante préférentielle chaque deuxième module d'amplification comprend un deuxième amplificateur opérationnel, au moins trois résistances et au moins un interrupteur en série avec au moins une des ces résistances. L'unité de calcul est agencée pour commander au moins un interrupteur en fonction de la valeur du signal de tension continue Umot.

Avantageusement le rapport entre ces résistances est déterminé en fonction de la tension d'alimentation de l'unité de calcul.

Avantageusement chaque deuxième module d'amplification est agencé pour générer la deuxième force électromotrice corrigée à partir de la première force électromotrice corrigée et d'un deuxième signal de tension de référence, qui peut être déterminé en fonction de la tension d'alimentation de l'unité de calcul.

Car le moteur M est sans balais, donc sans collecteur, à l'aide d'un PLL (« Phase-Locked Loop ») synchronisé sur les croisements des forces électromotrices avec PN, l'unité de calcul construit une évolution continue de l'angle de rotation du moteur qui permet de déterminer les angles de commutations et des bobines et du sélecteur d'EMFs. En effet les EMFs, qui sont sélectionnées par l'unité de calcul, croisent six fois PN (à 30°, 90°, 150°, 210°, 270°, 330°), alors que les commutations de bobines doivent se faire à 0°, 60°, 120°, etc.

Selon un aspect indépendant de l'invention, l'unité de calcul permet un asservissement de ce moteur M sans capteur ni balais qui est en position et non en vitesse. En effet l'unité de calcul construit un autre signal (dent de scie) virtuel synchronisé sur la vitesse requise. Les deux signaux (deux dents de scie) sont comparés de sorte à en extraire une erreur de poursuite qui, multipliée par un gain, donne la tension moteur Umot.

Ainsi, le signal moteur, une fois synchronisée sur celui virtuel (asservissement en position) donne une rotation angulaire aussi précise que la fréquence du quartz de l'unité de calcul, d'où une précisions de rotation de 0.1 %.

Ce type d'asservissement en position, à différence des solutions connues où l'asservissement du moteur est en vitesse, car basé sur l'amplitude des forces électromotrices, est extrêmement réactif et précis : des tests du laboratoire effectués par la demanderesse ont démontré qu'il est possible de maîtriser la poursuite angulaire du rotor même si un moteur tournant à 40'000 tours par minutes est stoppé par un blocage externe sur 0.5 tour.

Brève description des figures

Des exemples de mise en oeuvre de l'invention sont indiqués dans la description illustrée par les figures annexées dans lesquelles :

La figure 1 illustre un exemple d'un dispositif de contrôle du moteur connu.

La figure 2 illustre un autre exemple d'un dispositif de contrôle du moteur connu.

Les figures 3A à 3C illustrent pour chacune des trois phases moteur d'un moteur sans collecteur ni balais des portions de la tension génératrices de chaque phase qui sont des fragments de EMFs détectables par un dispositif de contrôle du moteur connu.

La figure 3D illustre les EMFs obtenues pas multiplexages des signaux des figures 3A à 3C.

La figure 3E illustre un moteur triphasé sans balais ni collecteur et le multiplexeur permettant d'obtenir les EMFs de la figure 3D.

La figure 4 illustre les EMFs dans une configuration idéale.

Les figures 5A et 5B illustrent respectivement la tension Umot de régulation du moteur en cas de basse vitesse et les EMFs correspondantes.

Les figures 6A et 6B illustrent respectivement la tension Umot de régulation du moteur en cas de haute vitesse et les EMFs correspondantes.

La figure 7 illustre un exemple d'un mode de réalisation du dispositif selon l'invention.

La figure 8 illustre un exemple du signal de tension intermédiaire V1 en fonction de la tension Umot du régulateur de tension du dispositif selon l'invention.

La figure 9 illustre un exemple de première force électromotrice corrigée maximale, minimale et moyenne en fonction de la tension Umot du régulateur de tension du dispositif selon l'invention.

La figure 10 illustre un exemple de deuxième force électromotrice corrigée maximale, minimale et moyenne en fonction de la tension Umot du régulateur de tension du dispositif selon l'invention.

La figure 11 illustre un autre exemple de deuxième force électromotrice corrigée maximale, minimale et moyenne en fonction de la tension Umot du régulateur de tension du dispositif selon l'invention.

La figure 12 illustre un autre exemple de deuxième force électromotrice corrigée maximale, minimale et moyenne en fonction de la tension Umot du régulateur de tension du dispositif selon l'invention.

La figure 13 illustre un exemple de répartition de plages de gain des EMFs qui est permise par une variante du dispositif selon l'invention.

Exemple(s) de mode de réalisation de l'invention

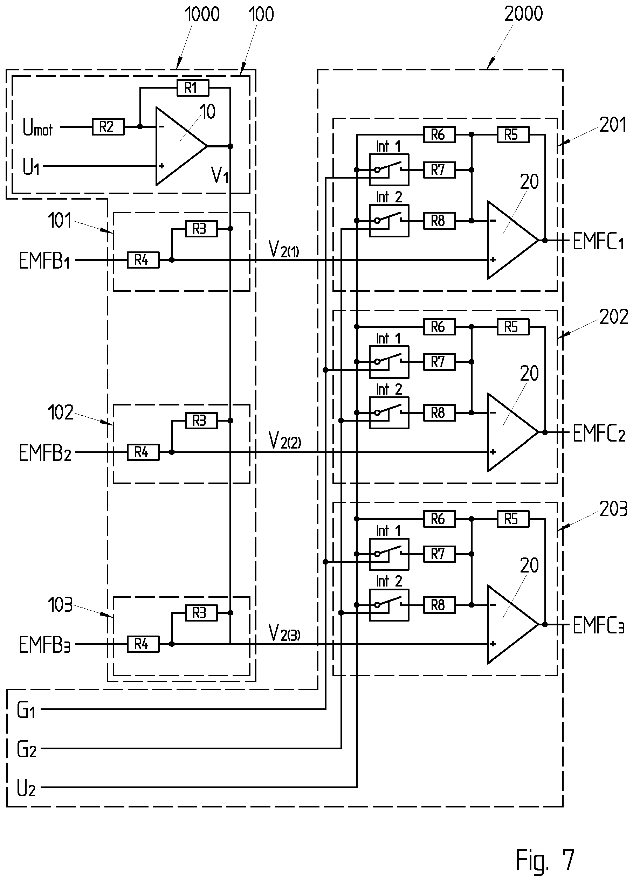

La figure 7 illustre un exemple d'un mode de réalisation du dispositif de contrôle d'un moteur sans capteur ni balais selon l'invention. Sa première partie 1000 comprend notamment :

- un premier module d'amplification 100 commun aux phases moteur et agencé pour générer un signal de tension intermédiaire V1,
- un diviseur de tension 101, 102, 103 pour chaque phase moteur, entre les noeuds sur les quels sont généré respectivement chaque force électromotrice EMFB1, EMFB2, EMFB3 à l'état brut prise directement sur les phases moteur d'un moteur M sans capteur ni balais non illustré et le noeud sur lequel est généré le signal de tension intermédiaire V1.

Chaque diviseur de tension 101, 102, 103 est agencé pour générer une première force électromotrice corrigée V2(1), V2(2), V2(3) ayant une valeur moyenne prédéterminée, et qui est utilisée par une unité de calcul non illustrée afin de contrôler le moteur M sur la base des ces premières forces électromotrices corrigées V2(1), V2(2), V2(3), notamment afin de calculer la position du rotor du moteur.

Avantageusement la valeur moyenne prédéterminée est sensiblement égale à la moitié de la valeur de la tension d'alimentation Zadc de l'unité de calcul.

Selon l'invention donc les premières forces électromotrices corrigées V2(1), V2(2), V2(3) sont automatiquement centrées sur la moyenne de la tension d'alimentation de l'unité de calcul sans utiliser des AGCs ou des boucles de réaction avec l'unité de calcul. En d'autres mots, en utilisant seulement des composants hardware, notamment le premier module d'amplification 100 et les diviseurs de tension 101, 102, 103 pour chaque phase moteur, il est possible de centrer de façon précise et fiable la moyenne des EMFs de façon à ce qu'elle soit sensiblement identique à la moitié de la tension d'alimentation de l'unité de calcul.

Dans la variante de la figure 7 le premier module d'amplification 100 est agencé pour générer sur un noeud du circuit le signal de tension intermédiaire V1 à partir du signal de tension continue Umot et d'un premier signal de tension de référence U1. Avantageusement ce premier signal de tension de référence est déterminé en fonction de la tension d'alimentation Zadc de l'unité de calcul.

Dans la variante de la figure 7 le premier module d'amplification 100 comprend un premier amplificateur opérationnel 10 et deux résistances R1, R2. Avantageusement le rapport entre ces résistances R1/R2 est déterminé en fonction de la tension d'alimentation Zadc de l'unité de calcul. Cette solution n'est pas limitative et toute autre configuration permettant une amplification avec des composants hardware peut être envisagée.

Avantageusement le premier module d'amplification 100 et chaque diviseur de tension 101, 102, 103 permet aussi que chaque première force électromotrice corrigée V2(1), V2(2), V2(3) ait une valeur maximale inférieure ou au plus égale à la tension d'alimentation Zadc de l'unité de calcul et une valeur minimale supérieure ou au plus égale à 0 V. En d'autres termes le dispositif selon l'invention permet que les premières forces électromotrices corrigées V2(1), V2(2), V2(3) soient compatibles avec la zone d'acquisition de l'unité de calcul [0, Zadc], en évitant des saturations.

Dans la variante de la figure 7 le dispositif comprend aussi une deuxième partie 2000, comprenant un deuxième module d'amplification 201, 202, 203 pour chaque phase moteur, chaque deuxième module d'amplification 201, 202, 203 étant agencé pour amplifier la première force électromotrice corrigée V2(1), V2(2) respectivement V2(3) de façon variable en fonction du signal de tension continue Umot et générer une deuxième force électromotrice corrigée EMFC1, EMFC2 respectivement EMFC3. Dans cette variante l'unité de calcul est agencée pour calculer la position du rotor du moteur M sur la base de ces deuxièmes forces électromotrices corrigées EMFC1, EMFC2 et EMFC3.

En d'autres mots dans cette dernière variante il est possible de modifier le gain des forces électromotrices en fonction de la vitesse moteur, c'est-à-dire de Umot, de façon à maintenir des amplitudes traitables par l'unité de calcul, notamment dans le cas de basses vitesses de rotation du moteur.

En effet chaque deuxième module d'amplification 201, 202, 203 est agencé pour amplifier la première force électromotrice corrigée V2(1), V2(2) respectivement V2(3) de façon à ce que chaque deuxième force électromotrice corrigée EMFC1, EMFC2 respectivement EMFC3 ait une amplitude qui corresponde sensiblement à celle de la tension d'alimentation de l'unité de calcul Zadc et une valeur moyenne prédéterminée sensiblement égale à la moitié de la tension d'alimentation de l'unité de calcul Zadc/2.

Dans une autre variante, chaque deuxième module d'amplification 201, 202, 203 permet des amplifications avec au moins deux possibles plages de gain, chaque plage de gain étant sélectionnée par l'unité de calcul en fonction de la valeur du signal de tension continue Umot.

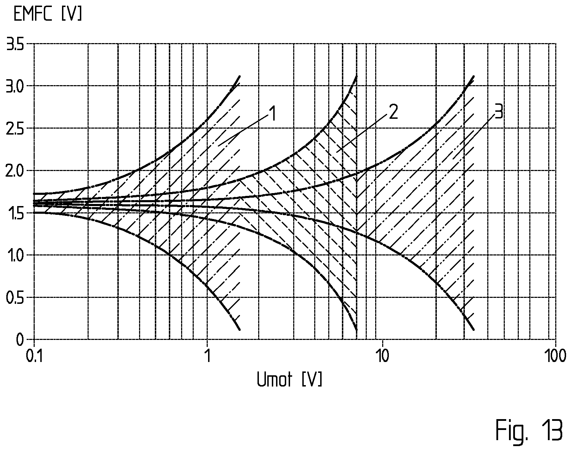

Dans la variante illustrée sur les figures 7 et 13, chaque deuxième module d'amplification a trois plages de gain possibles, où :

- La première plage de gain est sélectionnée par l'unité de calcul si la valeur du signal de tension continue Umot est comprise entre 0 V et une première fraction de la tension maximale du signal de tension continue Umot, par exemple et de façon non limitative entre 0 V et environ le 5% de Umot, par exemple entre 0 V et 1,5 V pour Umot max = 32 V. En d'autres mots, dès que Umot > 1.6 V, les EMFs saturent l'unité de calcul. Donc la première plage de gain est valable tant que Umot < 1.6 V.
- La deuxième plage de gain est sélectionnée par l'unité de calcul si la valeur du signal de tension continue Umot est comprise entre 0 V et une deuxième fraction de la tension maximale du signal de tension continue Umot, la deuxième fraction étant plus grande que la première fraction. Par exemple et de façon non limitative entre 0 V et environ le 20% de Umot, par exemple entre 0 V et 7 V pour Umot max = 32 V. En d'autres mots, dès que Umot > 7 V, les EMFs saturent l'unité de calcul. Donc la deuxième plage de gain est valable tant que Umot < 7 V.
- La troisième plage de gain est sélectionnée par l'unité de calcul si la valeur du signal de tension continue Umot est comprise entre 0 V et la tension maximale du signal de tension continue Umot, par exemple et de façon non limitative entre 0 V et 32 V.

Dans ce cas l'unité de calcul est agencée pour choisir la plage de gain qui donne la plus grande amplification si deux ou trois plages de gain sont possibles pour la même valeur du signal de tension continue Umot. Par exemple, en référence à la figure 13, si Umot = 1 V l'unité de calcul choisira la plage de gain 1, au lieu de la 2 ou de la 3 également possibles, car la plage de gain 1 pour Umot = 1 V donne une amplification plus grande que celle donnée par les plages de gain 2 ou 3.

Dans la variante de la figure 7 chaque deuxième module d'amplification 201, 202, 203 comprend un deuxième amplificateur opérationnel 20, quatre résistances R5, R6, R7, R8 et deux interrupteurs, notamment Int1 en série avec R7 et Int2 en série avec R8. L'unité de calcul est agencée pour commander chaque interrupteur Int1, Int2 à l'aide des signaux de commande G1 respectivement G2 en fonction de la valeur du signal de tension continue Umot.

Ainsi, si Umot a une valeur permettant de sélectionner la première plage de gain, les interrupteurs Int1 et Int2 resteront ouvert et le gain de chaque deuxième module d'amplification sera proportionnel au rapport des résistances R5 et R6.

Si Umot a une valeur permettant de sélectionner la deuxième plage de gain, le signal de commande G1 fermera l'interrupteur Int1 de deuxième module d'amplification (l'interrupteur Int2 étant ouvert) de façon à ce que son gain sera proportionnel au rapport de la résistance R5 et du parallèle entre R6 et R7.

Si Umot a une valeur permettant de sélectionner la troisième plage de gain, le signal de commande G2 fermera l'interrupteur Int2 du deuxième module d'amplification (l'interrupteur Int1 étant ouvert) de façon à ce que son gain sera proportionnel au rapport de la résistance R5 et du parallèle entre R6 et R8.

Avantageusement le rapport entre les résistances R5, R6, R7 et R8 est déterminé en fonction de la tension d'alimentation Zadc de l'unité de calcul.

Avantageusement chaque deuxième module d'amplification est agencé pour générer la deuxième force électromotrice corrigée EMFC1, EMFC2 respectivement EMFC3 à partir de la première force électromotrice corrigée V2(1), V2(2) respectivement V2(3) et d'un deuxième signal de tension de référence U2, qui avantageusement est égale à la moitié de la tension d'alimentation Zadc de l'unité de calcul (U2 = Zadc/2).

Exemple du calcul des U1, U2, k1, k2, k3(0), k3(1), k3(2)

Ci-dessous un exemple non limitatif du calcul de la première et deuxième tension de référence U1 respectivement U2, et des suivantes constantes, définies en référence au mode de réalisation de la figure 7 :

- k1 = R1/R2
- k2 = R3/R4
- k3(0) = R5/R6
- k3(1) = R5/(R6 // R7)
- k3(2) = R5/(R6 // R8)

Ces calculs font référence à une unité de calcul ayant une tension d'alimentation Zadc = 3.3 V, c'est à-dire une zone d'acquisition analogique appartenant à la plage [0 ; 3.3 V] et une tension continue Umot comprise entre 0 V et 32 V, c'est-à-dire ayant une valeur minimale de 0 V et une valeur maximale de 32 V.

Le dispositif de contrôle selon l'invention permet en même temps de:

1. Éliminer toute possibilité de saturation des premières forces électromotrices corrigées hors de la plage [0 ; Zadc].
2. Maintenir la moyenne des valeurs extrêmes des premières forces électromotrices corrigées au centre de la plage [0 ; Zadc].

La fonction du premier module d'amplification et de chaque diviseur de tension peut être décrite par les formules suivantes :

$$V_1 = (1 + k_1) \cdot U_1 - (k_1 \cdot U_{mot}) \qquad (1)$$

$$V_2 = [(1 - k_2) \cdot V_1] + (k_2 \cdot EMFB_n) \qquad (2)$$

où avec V2 (ou V2(i)) on indique une quelconque des premières forces électromotrices corrigées V2(1), V2(2), V2(3) de la figure 7.

On impose que les premières forces électromotrices corrigées V2(i) maximales soient comprises entre 0.1 V et 3.2 V (c'est-à-dire avec une marge inférieure et supérieure égale par exemple et de façon non limitative à 0.1 V par rapport à la plage [0 ; Zadc]) pour un moteur M tournant sous 32 V.

Si la vitesse du moteur est constante, Umot est constante et V1 l'est aussi. On peut extraire V1 de l'équation (2) :

$$V_1 = \frac{V_2 - k_2 \cdot EMFB_n}{1 - k_2} \qquad (3)$$

Puisque V1 est constante, on pose l'égalité de l'équation (3) pour V2=0.1 V et 3.2 V:

$$\frac{0.1}{1 - k_2} = \frac{3.2 - k_2 \cdot 32}{1 - k_2}$$

d'où

$$k_2 = 0.0968 \qquad (4)$$

En considérant la tension Umot = 0V (moteur à l'arrêt), bien que les premières forces électromotrices corrigées soient inexistantes, on impose que le niveau des premières forces électromotrices corrigées V2(i) doit se trouver sur la moyenne de Zadc, soit 3.3/2 V = 1.65 V.

De l'équation (3) on peut définir V1 :

$$V_{1(Umot=0)} = \frac{1.65}{1 - 0.0968} = 1.827 \qquad (5)$$

En considérant la tension Umot = 32V, on impose que V2 doit également se trouver à 1.65 V lorsque la tension EMFB = Umot/2 = 16V :

$$V_{1(Umot=32)} = \frac{1.65 - 0.0968 \cdot 16}{1 - 0.0968} = 0.112 \qquad (6)$$

A partir de l'équation (1), il est possible d'extraire la valeur de U1. Etant donné que U1 est constante pour Umot = 0V et Umot = 32 V, il est possible de trouver la valeur de k1 et donc de U1.

$$k_1 = 0.0536 \tag{7}$$

$$U_1 = 1.734[V] \tag{8}$$

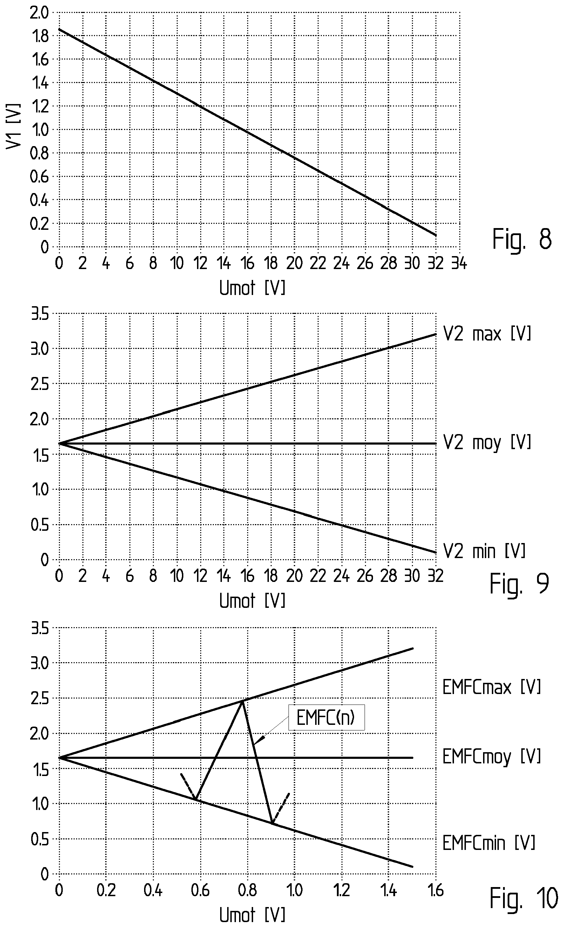

La figure 8 illustre un exemple du signal de tension intermédiaire V1 en fonction de la tension Umot du régulateur de tension du dispositif selon l'invention, tel que mesuré lors des tests faits au laboratoire par la demanderesse.

Comme illustré sur la figure 9, qui montre un exemple de première force électromotrice corrigée maximale (V2max), minimale (V2min) et moyenne (V2moy) en fonction de la tension Umot du régulateur de tension du dispositif selon l'invention, chaque première force électromotrice corrigée V2 a une valeur moyenne sensiblement égale à la moitié de la valeur de la tension d'alimentation Zadc de l'unité de calcul (dans ce cas Zadc/2 = 3.3/2 V = 1.65 V). En outre la valeur moyenne des premières forces électromotrice corrigées est constante indépendamment de la valeur de la tension Umot du signal du régulateur de tension. Enfin chaque première force électromotrice corrigée V2 ou V2(i) a une valeur maximale inférieure ou au plus égale à la tension d'alimentation de l'unité de calcul (3.3 V) et une valeur minimale supérieure ou au plus égale à 0 V, ce qui permet d'éliminer toute possibilité de saturation des premières forces électromotrices hors de la plage [0 ; Zadc].

Dans une variante préférentielle, le dispositif de contrôle selon l'invention permet aussi de

3. Modifier le gain des forces électromotrices en fonction de la vitesse moteur (c'est-à-dire en fonction de Umot) de manière à maintenir des amplitudes compatibles avec la tension d'alimentation de l'unité de calcul.

En effet, comme discuté ci-dessus, k1, U1 et k2, ou en d'autres termes le premier module d'amplification 100 et chaque diviseur de tension 101, 102, 103 (la première partie 1000 du dispositif de la figure 7) permettent d'éliminer toute possibilité de saturation des premières forces électromotrices hors de la plage [0 ; Zadc]. Cependant il peut être souhaitable d'avoir plusieurs plages de gain en fonction de la tension Umot, ce qui est avantageux notamment dans le cas d'une basse vitesse de rotation du moteur.

Pour cette raison il est possible d'introduire dans le dispositif selon l'invention un deuxième module d'amplification 201, 202, 203 (la deuxième partie 2000 du dispositif de la figure 7) pour chaque phase moteur, qui permet d'amplifier chaque première force électromotrice corrigée V2(1), V2(2), V2(3) de façon variable en fonction du signal de tension continue Umot, et de générer des deuxièmes forces électromotrices corrigées EMFC1, EMFC2, EMFC3. L'unité de calcul calculera donc la position du rotor sur la base de ces deuxièmes forces électromotrices corrigées EMFC1, EMFC2, EMFC3.

Il est possible de définir deux ou plusieurs plages de gain. Par exemple et de façon non limitative, il est possible de définir trois plages de gain, à savoir ;

- Plage I : Umot $\in$ [0 V; 1.5 V]
- Plage II : Umot $\in$ [0 V; 7 V]
- Plage III : Umot $\in$ [0 V; 32 V].

1.5 V et 7 V sont bien entendu des exemples de première respectivement deuxième fraction de la tension maximale (32 V) du signal de tension continue, et toute autre valeur différente peut être choisie.

La fonction de chaque deuxième module d'amplification peut être décrite par la formule suivante :

$$EMFC_n = [(V_2 + U_2) \cdot k_3] + U_2 \tag{9}$$

U2 est la moitié de la tension d'alimentation de l'unité de calcul, soit U2 = Zadc/2. Pour Zadc = 3.3 V, U2 = 1.65 V.

Pour chaque plage, on impose Umot = 1,5 V, 7 V respectivement 32 V, on calcule V2 avec la (2) et on impose que EMFC soit égale à 3.2 V (c'est-à-dire Zadc avec la marge de 0,1 V). Il est ainsi possible de déterminer :

$$k_{3(0)} = 1.000 \tag{10}$$

$$k_{3(1)} = 4.575 \tag{11}$$

$$k_{3(2)} = 21.32 \qquad (12)$$

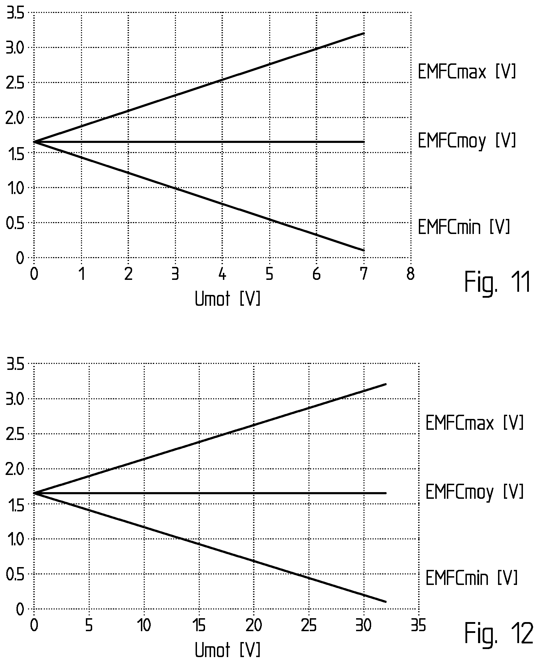

Les figures 10, 11 respectivement 12 illustrent un exemple de deuxième force électromotrice corrigée maximale (EMFCmax), minimale (EMFCmin) et moyenne (EMFmoy) en fonction de la tension Umot du régulateur de tension du dispositif selon l'invention, pour chaque plage de Umot correspondante à chaque plage de gain.

Comme illustré sur chacune des figures 10 à 12, chaque deuxième force électromotrice corrigée EMFC a une valeur maximale égale à tension d'alimentation de l'unité de calcul Zadc et une valeur minimale supérieure ou au plus égale à 0 V. De cette façon il est possible par exemple d'éviter les problèmes liés aux vitesses de rotation basses et hautes.

En outre chaque deuxième force électromotrice corrigée EMFC a une valeur moyenne sensiblement égale à la moitié de la valeur de la tension d'alimentation Zadc de l'unité de calcul (dans ce cas Zadc/2 = 3.3/2 V = 1.65 V). En outre la valeur moyenne des premières forces électromotrice corrigées est constante indépendamment de la valeur de la tension Umot du signal du régulateur de tension.

La figure 13 illustre un exemple de répartition de plages de gain 1, 2, 3 des deuxièmes forces électromotrices corrigées qui est permise par une variante du dispositif selon l'invention.

**Numéros de référence employés sur les figures**

| | |
|---|---|
| 1 | Première plage de gain |
| 2 | Deuxième plage de gain |
| 3 | Troisième plage de gain |
| 10 | Premier amplificateur opérationnel |
| 20 | Deuxième amplificateur opérationnel |
| 100 | Premier module d'amplification |
| 101 | Premier diviseur de tension |
| 102 | Deuxième diviseur de tension |
| 103 | Troisième diviseur de tension |
| 201 à 203 | Deuxièmes modules d'amplification |
| 1000 | Première partie du dispositif de contrôle |
| 2000 | Deuxième partie du dispositif de contrôle |
| M | Moteur sans capteur ni balais |
| Ph1 à Ph3 | Phases du moteur M |
| A, B, C | Commutateurs |
| Udc | Tension continue et fixe du régulateur de tension |
| Umot | Tension continue du régulateur de tension |
| PWM | Circuits « Pulse Width Modulation » ou modulation de largeur |
| #1 à #3 | d'impulsion |
| V+, Hi, | Trois états possibles de chaque commutateur A, B, C |
| 0V | |
| PN | Point neutre du moteur M |
| m | Multiplexeur |
| Zadc | Tension d'aimantation de l'unité de calcul (zone d'acquisition analogique) |
| Uemf | EMFs à l'état brut |
| U1 | Premier signal de tension de référence |
| U2 | Deuxième signal de tension de référence |
| Int1 | Premier interrupteur |
| Int2 | Deuxième interrupteur |
| G1 | Signal de commande de l'interrupteur Int1 |
| G2 | Signal de commande de l'interrupteur Int2 |
| EMFB1 à EMFB3 | Forces électromotrices à l'état brut |
| EMFC1 à EMFC3 | Deuxièmes forces électromotrices corrigées |
| R1 à R8 | Résistances |
| Int1- Int2 | Interrupteurs |

V1              Signal de tension intermédiaire

V2(1) à V2(3)   Premières forces électromotrices corrigées

**Revendications**

1.  Dispositif de contrôle d'un moteur (M) sans capteur ni balais comprenant

    - un diviseur de tension (101, 102, 103) entre chaque phase moteur (Ph1, Ph2, Ph3) et un noeud sur lequel est généré un signal de tension intermédiaire (V1),
    chaque diviseur de tension (101, 102, 103) étant agencé pour générer une première force électromotrice corrigée (V2(1), V2(2), V2(3)),
    - une unité de calcul agencée pour contrôler ledit moteur (M) sur la base desdites premières forces électromotrices corrigées (V2(1), V2(2), V2(3)) caractérisé en qu'il comprend
    - un premier module d'amplification (100) commun aux phases moteur du moteur (M) et agencé pour générer ledit signal de tension intermédiaire (V1),
    et en ce que
    chaque première force électromotrice corrigée (V2(1), V2(2), V2(3)) a une valeur moyenne sensiblement égale à la moitié de la valeur de la tension d'alimentation (Zadc) de ladite unité de calcul.

2.  Le dispositif selon la revendication 1, comprenant aussi

    - un régulateur de tension continue agencé pour générer un signal de tension continue, ayant une tension (Umot) comprise entre une valeur maximale (32 V) et une valeur minimale (0 V),
    - des commutateurs (A, B, C) agencés pour distribuer séquentiellement le signal de tension continue (Umot) aux phases moteur (Ph1, Ph2, Ph3) dudit moteur (M).

3.  Le dispositif selon la revendication 1, ladite valeur moyenne desdites premières forces électromotrice corrigées étant constante indépendamment de la valeur de tension (Umot) dudit signal de tension continue.

4.  Le dispositif selon l'une quelconque des revendications 2 à 3, chaque première force électromotrice corrigée (V2(1), V2(2), V2(3)) ayant une valeur maximale inférieure ou au plus égale à la tension d'alimentation (Zadc) de la l'unité de calcul et une valeur minimale supérieure ou au plus égale à 0 V.

5.  Le dispositif selon l'une quelconque des revendications 2 à 4, ledit premier module d'amplification (100) étant agencé pour générer ledit signal de tension intermédiaire (V1) à partir dudit signal de tension continue (Umot) et d'un premier signal de tension de référence (U1).

6.  Le dispositif selon la revendication 5, ledit premier signal de tension de référence (U1) étant déterminé en fonction de ladite tension d'alimentation (Zadc) de ladite unité de calcul.

7.  Le dispositif selon l'une quelconque des revendications 1 à 6, ledit premier module d'amplification (100) comprenant un premier amplificateur opérationnel (10) et deux résistances (R1, R2).

8.  Le dispositif selon la revendication 7, le rapport entre les deux dites résistances (R1, R2) étant déterminé en fonction de ladite tension d'alimentation (Zadc) de ladite unité de calcul.

9.  Le dispositif selon l'une quelconque des revendications 1 à 8, comprenant un deuxième module d'amplification (201, 202, 203) pour chaque phase moteur (Ph1, Ph2, Ph3),
    chaque deuxième module d'amplification (201, 202, 203) étant agencé pour amplifier chaque dite première force électromotrice corrigée (V2(1), V2(2), V2(3)) de façon variable en fonction dudit signal de tension continue (Umot) et générer une deuxième force électromotrice corrigée (EMFC1, EMFC2, EMFC3),
    ladite unité de calcul étant agencée pour calculer la position dudit rotor sur la base desdites deuxièmes forces électromotrices corrigées (EMFC1, EMFC2, EMFC3).

10. Le dispositif selon la revendication 9, chaque deuxième module d'amplification (201, 202, 203) étant agencé pour amplifier ladite première force électromotrice corrigée (V2(1), V2(2), V2(3)) de façon à ce que chaque deuxième force électromotrice corrigée (EMFC1, EMFC2, EMFC3) ait une amplitude qui corresponde sensiblement à celle de la tension d'alimentation (Zadc) de ladite unité de calcul et une valeur moyenne prédéterminée sensiblement égale à la moitié de la tension d'alimentation (Zadc) de ladite unité de calcul.

11. Le dispositif selon l'une quelconque des revendications 9 ou 10, chaque deuxième module d'amplification ayant au moins deux possibles plages de gain (1, 2, 3), chaque plage de gain étant sélectionnée par ladite unité de calcul en fonction de la valeur dudit signal de tension continue (Umot).

12. Le dispositif selon l'une quelconque des revendications 9 à 11, chaque deuxième module d'amplification (201, 202, 203) comprenant

- un deuxième amplificateur opérationnel (20), au moins trois résistances (R5, R6, R7, R8) et au moins un interrupteur (Int1, Int2) en série avec au moins une desdites au moins trois résistances (R5, R6, R7, R8),
- ladite unité de calcul étant agencée pour commander à l'aide d'au moins un signal de commande (G1, G2) ledit au moins un interrupteur (Int1, Int2) en fonction de la valeur dudit signal de tension continue (Umot).

13. Le dispositif selon la revendication 12, dans lequel le rapport entre lesdites au moins trois résistances (R5, R6, R7, R8) est déterminé en fonction de ladite tension d'alimentation (Zadc) de l'unité de calcul.

14. Le dispositif selon l'une quelconque des revendications 9 à 13, chaque deuxième module d'amplification (201, 202, 203) étant agencé pour générer chaque deuxième force électromotrice corrigée (EMFC1, EMFC2, EMFC3) à partir desdites premières forces électromotrices corrigée (V2(1), V2(2), V2(3)) et d'un deuxième signal de tension de référence (U2) sensiblement égale à la moitié de ladite tension d'alimentation (Zadc) de ladite unité de calcul.

**Patentansprüche**

1. Steuervorrichtung für sensorlosen und bürstenlosen Motor (M), aufweisend:

- einen Spannungsteiler (101 102, 103) zwischen jeder Motorphase (Ph1, Ph2, Ph3) und einen Knoten, auf dem das Zwischenspannungssignal (V1) erzeugt wird,
- wobei jeder Spannungsteiler (101, 102, 103) ausgebildet ist, eine erste korrigierte elektromotorische Kraft (V2(1), V2(2), V2(3)) zu erzeugen,
- eine Recheneinheit ausgebildet zum Steuern des Motors (M) auf der Basis der ersten korrigierten elektromotorischen Kraft (V2(1), V2(2), V2(3)) **dadurch gekennzeichnet, dass** sie weiterhin aufweist:
- ein den Motorphasen des Motors (M) gemeinsames erstes Verstärkungsmodul (100) ausgebildet ein Zwischenspannungssignal (V1) zu erzeugen und dadurch, dass

jede erste korrigierte elektromotorische Kraft (V2(1), V2(2), V2(3)) einen Mittelwert aufweist, der grundsätzlich dem halben Wert der Versorgungsspannung (Zadc) der Recheneinheit entspricht.

2. Die Vorrichtung nach Anspruch 1, weiter aufweisend:

- einen kontinuierlichen Spannungsregler ausgebildet für die Erzeugung eines kontinuierlichen Spannungssignals mit einer Spannung (Umot) zwischen einem Maximalwert (32V) und einem Minimalwert (0V),
- Kommutatoren (A, B, C) ausgebildet für das sequenzielle Verteilen des kontinuierlichen Spannungssignals (Umot) an die Motorphasen (Ph1, Ph2, Ph3) des Motors (M).

3. Die Vorrichtung nach Anspruch 1, wobei der Mittelwert der ersten korrigierten elektromotorischen Kraft unabhängig von dem Spannungswert (Umot) des kontinuierlichen Spannungssignal konstant ist.

4. Die Vorrichtung nach einem der Ansprüche 2 bis 3, wobei jede erste korrigierte elektromotorische Kraft (V2(1), V2(2), V2(3)) einen Maximalwert niedriger als die oder zumindest gleich der Versorgungsspannung (Zadc) der Recheneinheit und Minimalwert grösser als oder zumindest gleich 0V aufweist.

5. Die Vorrichtung nach einem der Ansprüche 2 bis 4, wobei das erste Verstärkungsmodul (100) ausgebildet ist, das Zwischenspannungssignal (V1) von dem kontinuierlichen Spannungssignal (Umot) und von einem ersten Referenzspannungssignal (U1) zu bestimmen.

**6.** Die Vorrichtung nach Anspruch 5, wobei das erste Referenzspannungssignal (U1) als Funktion der Versorgungsspannung (Zadc) der Recheneinheit bestimmt wird.

**7.** Die Vorrichtung nach einem der Ansprüche 1 bis 6, wobei das erste Verstärkungsmodul (100) weist einen ersten Operationsverstärker (10) und zwei Widerstände (R1, R2) auf.

**8.** Die Vorrichtung nach Anspruch 7, wobei das Verhältnis zwischen den zwei Widerständen (R1, R2) als Funktion der Versorgungsspannung (Zadc) der Recheneinheit bestimmt wird.

**9.** Die Vorrichtung nach einem der Ansprüche 1 bis 8, aufweisen ein zweites Verstärkungsmodul (201, 202, 203) für jede Motorphase (Ph1, Ph2, Ph3),
wobei jedes zweite Verstärkungsmodul (201, 202, 203) ausgebildet ist, jede der ersten korrigierten elektromotorischen Kraft (V2(1), V2(2), V2(3)) auf variable Art als Funktion des kontinuierlichen Spannugnssignals (Umot) zu verstärken und eine zweite korrigierte elektromotorische Kraft (EMFC1, EMFC2, EMFC3) zu erzeugen,
wobei die Recheneinheit ausgebildet ist, die Position des Rotors basierend auf der zweiten korrigierten elektromotorischen Kräfte (EMFC1, EMFC2, EMFC3) zu berechnen.

**10.** Die Vorrichtung nach Anspruch 9, wobei jedes zweites Verstärkungsmodul (201, 202, 203) ausgebildet ist, die erste korrigierte elektromotorische Kraft (V2(1), V2(2), V2(3)) zu verstärken, so dass jede zweite korrigierte elektromotorische Kraft (EMFC1, EMFC2, EMFC3) eine Amplitude, die grundsätzlich der der Versorgungsspannung (Zadc) der Recheneinheit entspricht, und einem vorbestimmten Mittelwert, der grundsätzlich der halben Versorgungsspannung (Zadc) der Recheneinheit entspricht, aufweist.

**11.** Die Vorrichtung nach einem der Ansprüche 9 oder 10, wobei jedes zweite Verstärkungsmodul mindestens zwei mögliche Gainbereiche (1, 2, 3) aufweist, wobei jeder Gainbereich von der Recheneinheit in Abhängigkeit von dem Wert des kontinuierlichen Spannungssignals (Umot) ausgewählt wird.

**12.** Die Vorrichtung nach einem der Ansprüche 9 bis 11, wobei jedes zweite Verstärkungsmodul (200) aufweist

- einen zweiten Operationsverstärker (20) und mindestens drei Widerstände (R5, R6, R7, R8) und mindestens einen Schalter (Int1, Int2), der seriell mit mindestens einem der drei Widerstände (R5, R6, R7, R8) verbunden ist,
- die Recheneinheit ausgebildet ist, mittels eines Steuersignals (G1, G2) den mindestens einen Schalter (Int1, Int2) entsprechend dem Wert des kontinuierlichen Spannungssignals (Umot) anzusteuern.

**13.** Die Vorrichtung nach Anspruch 12, wobei das Verhältnis zwischen den drei Widerständen (R5, R6, R7, R8) als Funktion der Versorgungsspannung (Zadc) der Recheneinheit bestimmt wird.

**14.** Die Vorrichtung nach einem der Ansprüche 9 bis 13, wobei jedes zweite Verstärkungsmodul (201, 202, 203) ausgebildet ist, jede zweite korrigierte elektromotorische Kraft (EMFC1, EMFC2, EMFC3) aus den ersten korrigierten elektromotorischen Kräften (V2(1), V2(2), V2(3)) und aus einem zweiten Referenzspannungssignals (U2), das grundsätzlich der Hälfte der Versorgungsspannung (Zadc) der Recheneinheit entspricht, zu erzeugen.

## Claims

**1.** Sensorless brushless motor (M) control device, comprising:

- a voltage divider (101, 102, 103) between each motor phase (Ph1, Ph2, Ph3) and a node on which the intermediary voltage signal (V1) is generated,
- wherein each voltage divider (101, 102, 103) is configured for generating a first corrected electromotive force (V2(1), V2(2), V2(3)),
- a computation unit configured for controlling this motor (M) on the basis of said first corrected electromotive forces (V2(1), V2(2), V2(3)) **characterized in that** it comprises:
- a first amplification module (100) common to the motor phases of the motor (M) and configured for generating an intermediary voltage signal (V1),

and **in that**
each first corrected electromotive force (V2(1), V2(2), V2(3)) has an average value essential equal to half of the value of the supply voltage (Zadc) of said computation unit.

2. The device of claim 1, also comprising:

  - a continuous voltage regulator configured for generating a continuous voltage signal, having a voltage (Umot) comprised between a maximum value (32 V) and a minimum value (0 V),
  - commutators (A, B, C) configured for distributing sequentially the continuous voltage signal (Umot) to the motor phases (Ph1, Ph2, Ph3) of said motor (M).

3. The device of claim 1, wherein said average value of said first corrected electromotive forces is constant independently of the voltage value (Umot) of said continuous tension signal.

4. The device of one of claims 2 to 3, wherein each first corrected electromotive force (V2(1), V2(2), V2(3)) has a maximum value lower than or at most equal to the supply voltage (Zadc) of the computation unit and a minimum value greater than or at most equal to 0 V.

5. The device of one of claims 2 to 4, wherein said first amplification module (100) is configured for generating said intermediary voltage signal (V1) from said continuous voltage signal (Umot) and from a first reference voltage signal (U1).

6. The device of claim 5, wherein said first reference voltage signal (U1) is determined as a function of said supply voltage (Zadc) of said computation unit.

7. The device of one of claims 1 to 6, wherein said first amplification module (100) comprises a first operational amplifier (10) and two resistors (R1, R2).

8. The device of claim 7, wherein the ratio between the two said resistors (R1, R2) is determined as a function of said supply voltage (Zadc) of said computation unit.

9. The device of one of claims 1 to 8, comprising a second amplification module (201, 202, 203) for each motor phase (Ph1, Ph2, Ph3),
wherein each second amplification module (201, 202, 203) is configured for amplifying each said first corrected electromotor force (V2(1), V2(2), V2(3)) in a variable manner as a function of said continuous voltage signal (Umot) and for generating a second corrected electromotive force (EMFC1, EMFC2, EMFC3),
wherein said computation unit is configured for calculating said rotor's position on the basis of said second corrected electromotive forces (EMFC1, EMFC2, EMFC3).

10. The device of claim 9, wherein each second amplification module (201, 202, 203) is configured for amplifying said first corrected electromotive force (V2(1), V2(2), V2(3)) so that each second corrected electromotive force (EMFC1, EMFC2, EMFC3) has an amplitude that corresponds essentially to that of the supply voltage (Zadc) of said computation unit and a predetermined average value essentially equal to half of the supply voltage (Zadc) of said computation unit.

11. The device of one of claims 9 or 10, wherein each second amplification module has at least two possible gain ranges (1, 2, 3), wherein each gain range is selected by said computation unit depending on the value of said continuous voltage signal (Umot).

12. The device of one of claims 9 to 11, wherein each second amplification module (201, 202, 203) comprises:

  - a second operational amplifier (20), at least three resistors (R5, R6, R7, R8) and at least one switch (Int1, Int2) connected serially with at least one of these at least three resistors (R5, R6, R7, R8),
  - wherein said computation unit is configured to control by means of at least one control signal (G1, G2) said at least one switch (Int1, Int2) according to the value of said continuous voltage signal (Umot).

13. The device of claim 12, wherein the ratio between said at least three resistors (R5, R6, R7, R8) is determined as a function of said supply voltage (Zadc) of the computation unit.

14. The device of one of claims 9 to 13, wherein each second amplification module (201, 202, 203) is configured for generating each second corrected electromotive force (EMFC1, EMFC2, EMFC3) from said first corrected electromotive forces (V2(1), V2(2), V2(3)) and from a second reference voltage signal (U2) essentially equal to half of said supply voltage (Zadc) of said computation unit.

Udc

PWM #1 — Ph 1

PWM #2 — Ph 2

M

PWM #3 — Ph 3

Fig. 1

Umot

A — Ph 1

B — Ph 2

M

C — Ph 3

Fig. 2

Fig. 3A

Ph 1

U [V]

| V+ | Hi | 0V | Hi | V+ | Hi |

t

Fig. 3B

Ph 2

U [V]

PN = Umot/2

t

Fig. 3C

Ph 3

U [V]

t

Fig. 3D

U emf

t

m

Fig. 3E

Fig. 4

Fig. 5A

Fig. 5B

Fig. 6A

Fig. 6B

Fig. 7

Fig. 8

Fig. 9

Fig. 10

Fig. 11

Fig. 12

Fig. 13

## RÉFÉRENCES CITÉES DANS LA DESCRIPTION

**Documents brevets cités dans la description**

- US 2005104545 A
- WO 06021075 A
- US 5998946 A
- US 5739651 A
- EP 1728315 B1
- US 2009167226 A
- US 2009033263 A
- EP 1109301 A
- US 2003234629 A
- GB 2176068 A
- FR 2846486
- JP 2001231285 B